# EUROPÄISCHE PATENTSCHRIFT

(11) **EP 2 318 736 B1**
(45) Veröffentlichungstag und Bekanntmachung des Hinweises auf die Patenterteilung: **29.02.2012**
(21) Anmeldenummer: 09725219.1
(22) Anmeldetag: 05.03.2009
(51) Int. Cl.: F16H 59/02, F16H 61/24

(54) **BETÄTIGUNGSEINRICHTUNG MIT HAPTIKEMULATION**
ACTUATION DEVICE WITH HAPTIC EMULATION
DISPOSITIF D'ACTIONNEMENT À ÉMULATION HAPTIQUE

(30) Priorität: 26.03.2008 DE 102008015874
(43) Veröffentlichungstag der Anmeldung: 11.05.2011
(73) Patentinhaber: Lemförder-Electronic GmbH, 32339 Espelkamp (DE)
(72) Erfinder: HAEVESCHER, Rainer, 32351 Stemwede (DE)
(86) Internationale Anmeldenummer: PCT/DE2009/000295
(87) Internationale Veröffentlichungsnummer: WO 2009/117980

(56) Entgegenhaltungen:
- EP-A- 1 591 697
- WO-A-00/39783
- WO-A-96/42078
- DE-A1- 19 848 191
- DE-B3-102005 060 933
- US-A- 5 059 882
- US-A- 5 735 490
- US-A1- 2006 283 279

## Beschreibung

Die Erfindung betrifft eine Betätigungseinrichtung für ein Gangwechselgetriebe, beispielsweise für ein Schaltgetriebe oder für einen Getriebeautomaten mit sbift-by-wire-Betätigung, gemäß dem Oberbegriff des Patentanspruchs 1. Eine derartige Betätigungseinrichtung ist aus der gattungsbildenden DE 10 2005 060 933 B3 bekannt.

Gangwechselgetriebe von Kraftfahrzeugen werden im Allgemeinen mittels einer im Griffbereich des Fahrers angeordneten Betätigungseinrichtung geschaltet bzw. gesteuert. Regelmäßig kommen hierzu Betätigungselemente wie Schalthebel oder Wählhebel zum Einsatz, die beispielsweise zwischen den Frontsitzen des Kraftfahrzeugs oder in anderen Bereichen des Cockpits angeordnet sind.

Dabei wird aus Gründen der Ergonomie und Sicherheit insbesondere gefordert, dass dem Fahrer etwaige momentan nicht zulässige Schaltzustände, bzw. der Ablauf der angeforderten Schaltoperation in Form entsprechender Schaltwiderstände bzw. Sperren am Betätigungshebel haptisch deutlich spürbar signalisiert werden, wie der Fahrer dies beispielsweise vom vollsynchronisierten mechanischen Schaltgetriebe mit dessen drehzahl- und geschwindigkeitsabhängigen Synchronsperren, oder auch von der konventionellen Betätigung eines Getriebeautomaten mit dessen Rastierung und dessen Schaltsperren kennt und gewohnt ist.

Daher ist es in jedem Fall erforderlich, dass dem Fahrer bei der Getriebebetätigung klare haptische bzw. taktile Rückmeldungen über den aktuellen Schalt- bzw. Betriebszustand des Getriebes bzw. über den Schalterfolg vermittelt werden.

Bei der elektrischen bzw. shift-by-wire-Betätigung von Gangwechselgetrieben existiert jedoch keine mechanische Kopplung mehr zwischen dem Betätigungshebel in der Fahrgastzelle und dem Kraftfahrzeuggetriebe im Motorraum. Vielmehr erfolgt die Übertragung der Schaltbefehle von der Betätigungseinrichtung zum Kraftfahrzeuggetriebe beim "shift-by-wire"-Getriebe mittels elektrischer oder elektronischer Signale und anschließender zumeist elektrohydraulischer Umsetzung der Schaltbefehle am Getriebe. Die fehlende mechanische Verbindung zwischen der Getriebeaktuatorik und dem Betätigungshebel führt dabei jedoch dazu, dass der Getriebezustand, etwaige Schaltsperren oder unzulässige Schaltbefehle nicht mehr direkt und für den Fahrer spürbar auf den Zustand des Betätigungshebels rückwirken können.

Der Fahrer kann bei shift-by-wire-gesteuerten Getrieben somit nicht ohne weiteres anhand bestimmter am Betätigungshebel spürbar blockierter Schaltstellungen erkennen, dass Hebelstellungen, Fahrstufen bzw. Schaltbefehle im momentanen Fahrzustand eventuell nicht zulässig sind und somit auch nicht angewählt werden können. Ebensowenig wirkt im Fall der shift-by-wire-Betätigung die Ausführung der Schaltbefehle des Fahrers durch das Getriebe auf den Betätigungshebel zurück, weshalb der Fahrer den Ablauf der Schaltbetätigung somit auch nicht haptisch spürbar wahrnehmen kann, wie er dies beispielsweise vom mechanisch betätigten Schaltgetriebe mit dessen Rastierung und Synchronsperren gewohnt ist.

In Abhängigkeit des Zustands des zu bedienenden Gangwechselgetriebes sowie in Abhängigkeit anderer Zustandsfaktoren am Kraftfahrzeug - z.B. Motordrehzahl, Fahrzeuggeschwindigkeit, Kupplungsstellung etc. - ist es zur Realisierung des erforderlichen haptischen Feedback bei shift-by-wire-gesteuerten Getrieben somit notwendig, die Bewegung des Betätigungshebels je nach Getriebezustand aktiv sowie aktuatorisch gesteuert zu begrenzen, zu verzögern oder ganz zu blockieren.

Nur auf diese Weise kann dem Fahrer beim Griff nach dem Betätigungshebel auch bei einem shift-by-wire-gesteuerten Getriebe haptisch spürbar vermittelt werden, dass sein Schaltwunsch - beispielsweise aufgrund der aktuellen Geschwindigkeit des Kraftfahrzeugs bzw. aufgrund eines momentanen Betriebszustands des Gangwechselgetriebes - nicht zulässig und damit gesperrt ist. Auch lässt sich somit vermeiden, dass vom shift-by-wire-Getriebe aktuell nicht umsetzbare Schaltbefehle, die von der Getriebe-Elektronikeinheit erkannt und somit nicht von der Betätigungseinrichtung an das Getriebe übermittelt werden, am Betätigungshebel dennoch eingelegt werden können.

Ebenso ist eine solche Aktuatorik am Betätigungshebel erforderlich, wenn der Fahrer auch bei einem shift-by-wire-gesteuerten Getriebe dieselbe haptische Rückmeldung erfahren soll wie bei einem mechanisch betätigten Getriebe - wie beispielsweise bei einem manuellen Schaltgetriebe mit Übertragungsgestänge - bei dem das Einlegen der einzelnen Gänge am Schalthebel insbesondere drehzahl- bzw. geschwindigkeitsabhängig spürbar entsprechende Gegenkraftverläufe am Bedienhebel erzeugt.

Wie zum Beispiel aus der DE 198 48 191 A1 hervorgeht, ist im Stand der Technik versucht worden, eine dementsprechende Haptik bei einem Betätigungselement für ein Gangwechselgetriebe zu realisieren, indem das Betätigungselement mit einem elektronisch steuerbaren Krafterzeugungselement bzw. Bewegungsdämpfer versehen worden ist, der mittels einer Steuereinrichtung so angesteuert wird, dass bei der Bedienung des Betätigungselements durch den Fahrer die mit den jeweiligen Zustandsänderungen im Gangwechselgetriebe einhergehenden Gegenkräfte am Betätigungselement simuliert werden können.

Für die realistische Nachbildung der Haptik, insbesondere zur realistischen Emulation der am Betätigungshebel wirkenden Gegenkräfte, ist es dabei jedoch für die Steuerelektronik des Betätigungshebels erforderlich, zu jeder Zeit den Zustand des Betätigungshebels sowohl bezüglich Position und gegebenenfalls Winkelgeschwindigkeit, als auch bezüglich der auf den Betätigungshebel vom Fahrer aktuell aufgebrachten Kraft zu kennen. Gemäß den aus dem Stand der Technik bekannten Lösungen ist hierzu jedoch zunächst einmal ein erster Sensor erforderlich, der Position und gegebenenfalls Winkelgeschwindigkeiten des Betätigungshebels erfasst, sowie zusätzlich ein weiterer Sensor, der die vom Nutzer aufgebrachte Kraft ermittelt.

Aufgrund zu erfüllender Anforderungen bezüglich der Sicherheit gegen Systemausfall kann es zudem erforderlich sein, diese beiden beim Stand der Technik grundsätzlich notwendigen Sensoren jeweils doppelt oder mehrfach ausführen zu müssen. Hiermit sind im Ergebnis beim Stand der Technik erhebliche konstruktive Aufwände und dementsprechende Kosten durch die hohe Anzahl der erforderlichen Sensoren verbunden.

Mit diesem Hintergrund ist es Aufgabe der vorliegenden Erfindung, eine Betätigungseinrichtung mit einer Einrichtung zur Emulation der Haptik für den Betätigungshebel zu schaffen -insbesondere zur elektrischen bzw. elektronischen shift-by-wire-Betätigung eines Gangwechselgetriebes - mit der sich die genannten Nachteile des Standes der Technik überwinden lassen. Die Betätigungseinrichtung soll dabei insbesondere konstruktiv einfach und damit kostengünstig darstellbar sein wie auch eine zuverlässige und genaue Ermittlung der auf den Betätigungshebel wirkenden Betätigungskräfte ermöglichen. Ferner soll eine zuverlässige und realistische Emulation der Haptik eines mechanisch rastierten Betätigungshebels ermöglicht werden.

Diese Aufgabe wird durch eine Betätigungseinrichtung mit den Merkmalen des Patentanspruchs 1 gelöst.

Bevorzugte Ausführungsformen sind Gegenstand der Unteransprüche.

In für sich genommen zunächst bekannter Weise umfasst die Betätigungseinrichtung gemäß der vorliegenden Erfindung einen Betätigungshebel mit einem Sensor zur Ermittlung der aktuellen Position des Betätigungshebels. In an sich ebenfalls bekannter Weise umfasst die Betätigungseinrichtung ferner eine Einrichtung zur Emulation der Haptik, die einen mit dem Betätigungshebel verbundenen, steuerbar verstellbaren elektrorheologischen oder magnetorheologischen Dämpfer sowie einen motorischen Aktuator umfasst.

Erfindungsgemäß zeichnet sich die Betätigungseinrichtung jedoch dadurch aus, dass - zur Ermittlung der auf den Betätigungshebel ausgeübten Bedienkraft mittels des Positionssensors - an einer zunächst einmal beliebigen Stelle innerhalb der bezüglich der Betätigungskraft bestehenden Wirkverbindung zwischen Betätigungshebel, verstellbarem Dämpfer und der Anlenkung des Dämpfers am Sockel der Betätigungseinrichtung ein Federelement mit bekannter Federkonstante angeordnet ist.

Dank des Federelements innerhalb der genannten Wirkverbindung und dessen bekannter Federkonstante genügt erfindungsgemäß bereits ein einziger in der Betätigungseinrichtung vorhandener Positionssensor zur Ermittlung sowohl der momentanen Position des Betätigungshebels als auch zur Ermittlung der vom Bediener auf den Betätigungshebel ausgeübten Betätigungskraft. Mit dem Begriff "an beliebiger Stelle innerhalb der Wirkverbindung" wird zum Ausdruck gebracht, dass es zur Verwirklichung der Erfindung zunächst prinzipiell unerheblich ist, ob das Federelement im Bereich der Verbindung zwischen Betätigungshebel und verstellbarem Dämpfer, im Bereich der Verbindung zwischen dem verstellbaren Dämpfer und dessen Anlenkung am Sockel der Betätigungseinrichtung oder auch an einer beliebigen Stelle zwischen diesen beiden Verbindungen angeordnet ist.

Erfindungsgemäß erfolgt dabei die Ermittlung der auf den Betätigungshebel ausgeübten Betätigungskraft mittels des Positionssensors dergestalt, dass durch den Positionssensor eine Kompression bzw. Expansion des Federelements registriert wird, sobald durch den Bediener eine Betätigungskraft auf den Betätigungshebel ausgeübt wird. Demzufolge kann ein mit dem Betätigungshebel verbundener Positionssensor eine entsprechende (geringfügige) Bewegung des Betätigungshebels aufgrund der Betätigungskraft registrieren. Aus der Größe dieser kraftinduzierten Bewegung des Betätigungshebels kann sodann anhand der bekannten Federkonstante des Federelements die Größe der auf den Betätigungshebel ausgeübten Kraft ermittelt werden.

In Abhängigkeit von der Größe der auf den Betätigungshebel vom Bediener ausgeübten Betätigungskraft kann von der Steuerelektronik der Betätigungseinrichtung sodann beispielsweise eine entsprechende Ansteuerung des Dämpfers erfolgen, durch die - entsprechend der Überwindung einer realen Rastierung - der Bediener bei der Einleitung der Bewegung des Betätigungshebels die gewünschte realistische Gegenkraft erfährt. Auf diese Weise lässt sich - lediglich durch die Anordnung aus Positionssensor, Federelement und verstellbarem Dämpfer - die von einem mechanisch rastierten Betätigungshebel bekannten Haptik bereits weitestgehend realistisch simulieren bzw. nachbilden.

Bei dem Betätigungshebel kann es sich dabei entweder um einen rastierten, zwischen zumindest zwei Schaltstellungen bewegbaren Betätigungshebel mit stabilen Hebelstellungen handeln, oder aber um einen monostabilen Betätigungshebel, der nach jeder Betätigung wieder in eine neutrale Mittelstellung zurückkehrt.

Die Verwendung eines elektrorheologischen oder magnetorheologischen Dämpfers ermöglicht die variable Erzeugung nahezu beliebiger Gegenkräfte, ggf. bis hin zur gesteuerten Blockierung des Dämpfers und somit des Betätigungshebels, mit lediglich minimalem Energieeinsatz und damit minimalem Stromverbrauch und minimaler Wärmeentwicklung. Ein weiterer Vorteil der Verwendung eines elektrorheologischen oder magnetorheologischen Dämpfers liegt in der praktisch verschleißfreien und verzögerungsfreien Verstellbarkeit der Dämpfercharakteristik, was ebenfalls der möglichst realistischen Nachbildung der Haptik eines mechanischen Betätigungshebels zugute kommt.

Die Erfindung lässt sich zunächst einmal unabhängig davon verwirklichen, wie das Federelement konstruktiv ausgebildet und angeordnet ist, solange sichergestellt ist, dass bei Kraftaufbringung auf den Betätigungshebel die erforderliche geringfügige Bewegung des Betätigungshebels infolge einer entsprechenden Kompression des Federelements erfolgt. Gemäß einer bevorzugten Ausführungsform der Erfindung ist das Federelement jedoch durch ein Elastomerelement, beispielsweise durch einen O-Ring gebildet.

Auf diese Weise kann eine besonders kostengünstige und platzsparende Realisierung und Anordnung des Federelements erfolgen, beispielsweise indem das Federelement bzw. der O-Ring an einer beliebigen Stelle innerhalb der Wirkverbindung zwischen dem Betätigungshebel und dem steuerbaren Dämpfer - bzw. der Anlenkung des Dämpfers am Gehäusesockel der Betätigungseinrichtung - angeordnet wird

Gemäß einer weiteren bevorzugten Ausführungsform der Erfindung ist das Federelement im Bereich eines Gelenks der Betätigungseinrichtung angeordnet, bzw. bildet einen Bestandteil eines Gelenks der Betätigungseinrichtung.

Hierdurch ergibt sich eine besonders einfache konstruktive Ausführung, da auf diese Weise keine konstruktiv eigenständige Federeinrichtung erforderlich ist. Stattdessen wird einfach eines der Gelenke der Betätigungseinrichtung - beispielsweise mittels Integration des vorzugsweise als Elastomerelement ausgebildeten Federelements in das Gelenk selbst - im gewünschten Maße elastisch ausgebildet. Auf diese Weise kann z.B. entweder die Anlenkung des verstellbaren Dämpfers am Gehäusesockel, oder die Verbindung des verstellbaren Dämpfers mit dem Betätigungshebel zur Unterbringung des Federelements verwendet werden.

ERfindungsgemäβ der verstellbare Dämpfer der Haptikemulationseinrichtung - unter Einsatz eines Steuerungskennfelds - ausschließlich zur Erzeugung von Gegenkräften gegen die vom Bediener aufgebrachten Handkräfte eingerichtet. Der motorische Aktuator hingegen ist - ebenfalls anhand des Steuerungskennfelds - ausschließlich zur aktuatorischen Bewegung des Betätigungshebels eingerichtet. Es findet somit anhand des Steuerungskennfelds eine definierte und exakte Aufgabenteilung zwischen dem Dämpfer und dem motorischen Aktuator statt dergestalt, dass Kräfte ausschließlich durch den Dämpfer und Bewegungen ausschließlich durch den motorischen Aktuator erzeugt werden.

Der Aktuator wird somit - im Sinne eines Force Feedback - im Unterschied zum Stand der Technik nicht mehr zur Krafterzeugung eingesetzt, sondern dient ausschließlich dazu, den Betätigungshebel aktiv aktuatorisch zu bewegen. Hierdurch lässt sich die Haptik eines mechanischen Betätigungshebels äußerst realistisch und vollständig simulieren und nachbilden. Insbesondere kann durch die Kombination des verstellbaren Dämpfers mit dem Aktuator auch die Haptik einer mechanischen Rastierung vollkommen realistisch nachgebildet werden, ohne dass eine mechanische Rastierung tatsächlich vorhanden ist. Dabei ist der verstellbare Dämpfer spezifisch und ausschließlich für die Erzeugung realistischer Gegenkräfte der Rastierung des Betätigungshebels bzw. des Fahrzeuggetriebes zuständig, während der Aktuator spezifisch und ausschließlich für das realistische Rückfedern des Betätigungshebels in die Vertiefungen der virtuellen Rastierkulisse zuständig ist.

Dies ist auch dahingehend besonders vorteilhaft, als sich hierdurch ein minimaler Energieverbrauch für Aktuatorik und Haptikemulation eines Betätigungshebels erreichen lässt, und gleichzeitig der Aktuator minimal dimensioniert werden kann. Denn im Unterschied zum Stand der Technik wird der Aktuator vorliegend lediglich zur Erzeugung von Bewegungen des Betätigungshebels, nicht aber zur Erzeugung nennenswerter Gegenkräfte herangezogen, da jegliche Gegenkräfte gegen die vom Bediener aufgebrachten Betätigungskräfte vollständig von dem steuerbaren Dämpfer erzeugt werden können.

Sobald der Bediener jedoch keine nennenswerten Betätigungskräfte mehr auf den Hebel ausübt, kann durch die Steuerung und durch das hinterlegte Kennfeld eine entsprechende sofortige Umschaltung der Ansteuerung des Dämpfers auf den motorischen Aktuator erfolgen, und es kann mittels des motorischen Aktuators das Zurückfallen des Betätigungshebels in die nächstliegende Vertiefung der (tatsächlich gar nicht vorhandenen) Rastkulisse des Getriebes bzw. der Betätigungseinrichtung simuliert werden. Die Aufgabe der Erzeugung der beim Zurückfallen des Betätigungshebels in die Vertiefung der virtuellen Rastkulisse ggf. erforderlichen Bremskräfte sowie die bis zum Stillstand des Betätigungshebels erforderliche Bewegungsdämpfung können dabei entsprechend wieder durch den Dämpfer übernommen werden.

Eine solche vollständige Emulation nicht nur der Haptik der Schaltwiderstände einer Rastierkulisse, sondern auch der Rückfederungsbewegungen des Wählhebels in die Vertiefungen der Rastkulisse hinein stellt einen entscheidenden Vorteil und eine entscheidende, mit der Erfindung verbundene Neuerung dar.

Hierdurch wird es beispielsweise auch vorstellbar, einen Betätigungshebel mit einer variablen Rastierung auszustatten, bei der nicht nur die Härte der Rastierung, sondern auch die Anzahl der Rastvertiefungen sowie deren Abstand zueinander frei variabel - mittels Software, bzw. mittels Auswahl eines entsprechenden Kennfelds für die Ansteuerung von Dämpfer und motorischem Aktuator - eingestellt werden kann. Beispielsweise kann so sowohl die Anzahl der Rastierpunkte als auch deren Abstand und Härte softwareseitig im Hinblick auf die Präferenz des jeweiligen Fahrers eingestellt werden. Mittels des hinterlegten Kennfelds erfolgt dabei eine Ansteuerung entweder des Dämpfers zur Erzeugung von Gegenkräften (solange der Benutzer Handkräfte auf den Hebel ausübt) oder des motorischen Aktuators (sobald der Benutzer keine nennenswerten Handkräfte mehr auf den Hebel ausübt und der Hebel somit in seiner Rastierposition zurückzufalten hat).

Auf diese Weise ist es sogar möglich, dem Fahrer je nach Wunsch oder Präferenz einmal die Haptik eines mechanisch betätigten Schaltgetriebes, und ein anderes Mal die Haptik eines Getriebeautomaten oder auch einer stufenlosen Schaltung zur Verfügung zu stellen. Zur hierfür ggf. erforderlichen Realisierung mehrerer Schaltgassen eines Wählhebels oder Schalthebels kann dabei die Anordnung aus verstellbarem Dämpfer , Aktuator und Federelement mehrfach vorgesehen sein, beispielsweise entlang zweier senkrecht zueinander angeordneter Bewegungssachsen eines Betätigungshebels.

Die Erfindung lässt sich unabhängig davon verwirklichen, wie der Aktuator konstruktiv ausgebildet und angeordnet wird. Insbesondere kommt es dank der Erfindung und der damit ermöglichten Reduzierung der Dimensionierung für den Aktuator in Betracht, einen getriebelosen, den Betätigungshebel direkt antreibenden Aktuator einzusetzen. Weitere Möglichkeiten bei der Auswahl des Aktuators liegen bei einem Gleichstrommotor mit oder ohne Bürsten, ebenso kann ein Schrittmotor eingesetzt werden.

Gemäß einer bevorzugten Ausführungsform jedoch handelt es sich bei dem Aktuator der Betätigungseinrichtung um einen elektrischen Servo-Getriebemotor, wobei der Betätigungshebel bevorzugt unmittelbar mit der Abtriebswelle des Aktuators verbunden ist. Hierdurch wird eine besonders platzsparende, robuste und kostengünstige Konstruktion erreicht. Da der Aktuator nur für die Bewegung bzw. aktuatorische Rückführung des Betätigungshebels in die (virtuellen) Vertiefungen der Rastkulisse zuständig ist, während die Aufgabe der Erzeugung von Gegenkräften ausschließlich vom gesteuerten Dämpfer übernommen werden kann, wird es möglich, einen verhältnismäßig kleinen und leichten Aktuator zu verwenden, dessen Welle zudem direkt auf den Betätigungshebel wirken kann.

Im Folgenden wird die Erfindung anhand lediglich Ausführungsbeispiele darstellender Zeichnungen näher erläutert. Es zeigt:
- **Fig. 1**: in schematischer isometrischer Ansicht das Wirkprinzip einer Ausführungsform der Betätigungseinrichtung gemäß der vorliegenden Erfindung mit verstellbarem Dämpfer und Aktuator; und
- **Fig. 2**: in isometrischer Ansicht eine weitere Ausführungsform einer Betätigungseinrichtung gemäß der Erfindung.

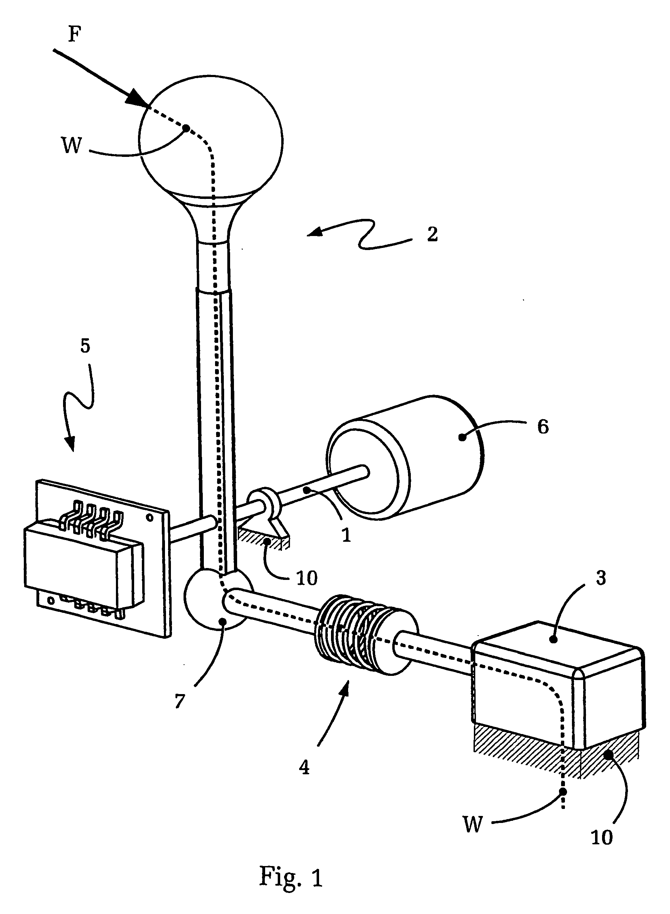

**Fig. 1** zeigt in schematisch ausgeführter isometrischer Darstellung das Wirkprinzip einer Betätigungseinrichtung gemäß der vorliegenden Erfindung, mit verstellbarem Dämpfer und Aktuator.

Man erkennt zunächst einmal einen auf einer Welle 1 gelagerten Betätigungshebel 2. Ferner erkennbar wird ein höchst schematisch dargestellter verstellbarer Dämpfer 3, ein zwischen dem verstellbaren Dämpfer 3 und dem Wählhebel 2 angeordnetes Federelement 4, sowie ein Positionssensor 5 und ein Aktuator 6, wobei sowohl der Positionssensor 5 als auch der Aktuator 6 direkt mit der Welle 1 des Betätigungshebels 2 verbunden sind bzw. direkt mit der Welle 1 interagieren. Die Welle 1 ist mittels einer Lagerung mit dem (durch die Schraffur angedeuteten) Sockel 10 der Betätigungseinrichtung verbunden. Die ebenfalls vorhandene Verbindung des Aktuators 6 und des Positionssensors 5 mit dem Sockel 10 der Betätigungseinrichtung ist - der Übersichtlichkeit halber - in der Schemadarstellung gemäß Fig. 1 nicht dargestellt.

Der verstellbare Dämpfer 3 bzw. das Federelement 4 ist über ein schematisch angedeutetes Gelenk 7 mit dem Betätigungshebel 2 verbunden, wobei der verstellbare Dämpfer 3 ferner am Sockel 10 der Betätigungseinrichtung angelenkt bzw. befestigt ist.

Die in Fig. 1 dargestellte Ausführungsform besitzt damit sowohl einen Aktuator 6 als auch eine Kombination aus Federelement 4 und erfindungsgemäß doppelt nutzbarem Positionssensor 5.

Auf diese Weise kann bei der dargestellten Ausführungsform zunächst einmal - lediglich mittels des einzigen Positionssensors 5 - sowohl die momentane Position und/oder Winkelgeschwindigkeit des Betätigungshebels 2 um die Welle 1, als auch die vom Fahrer auf den Betätigungshebel 2 aufgebrachte Bedienkraft F ermittelt werden. Denn sobald vom Fahrer auf den Betätigungshebel 2 eine Kraft F ausgeübt wird, so führt dies - je nach Kraftrichtung - zu einer geringfügigen Kompression bzw. Expansion des Federelements 4. Diese Kompression bzw. Expansion des Federelements 4 teilt sich über die Welle 1 jedoch auch dem Positionssensor 5 mit, so dass aus den Sensorsignalen des Positionssensors 5 sowie aus der bekannten Federkonstante des Federelements 4 die Größe der auf den Betätigungshebel 2 ausgeübten Betätigungskraft F ermittelt werden kann. Ein separater Sensor eigens zur Ermittlung der auf den Betätigungshebel 2 ausgeübten Kräfte kann dank der Erfindung somit entfallen.

Die in **Fig.1** dargestellten Ausführungsform der Betätigungseinrichtung besitzt neben Positionssensor 5 und verstellbarem Dämpfer 3 auch einen motorischen Aktuator 6 zur aktuatorischen Bewegung des Betätigungshebels 2. Hiermit lässt sich die Haptik einer mechanischen Betätigungseinrichtung für ein Getriebe vollständig nachbilden, einschließlich der Rastierung durch eine in einem mechanisch betätigten Getriebe oder in einer mechanischen Betätigungseinrichtung ansonsten vorhandene Rastiereinrichtung.

Dabei ist der verstellbare Dämpfer zur Simulation der durch die Rastiereinrichtung bzw. durch die im Getriebe entstehenden Gegenkräfte - gegebenenfalls bis hin zur Blockierung des Betätigungshebels 2 bei unzulässigen Schaltbefehlen - zuständig. Der motorische Aktuator 6 hingegen tritt erst dann in Aktion, wenn der Betätigungshebel 2 bewegt werden muss, ohne dass vom Fahrer Kräfte auf den Betätigungshebel 2 ausgeübt werden. Dies ist insbesondere dann der Fall, wenn der Hebel 2 losgelassen wird, während er sich noch nicht genau in einer (virtuellen) Rastierposition befindet. In diesem Fall wird der Aktuator 6 durch die Steuerelektronik der Betätigungseinrichtung so angesteuert, dass der Betätigungshebel 2 mittels des Aktuators 6 in die Mitte der entsprechenden, virtuellen Rastierposition zurückfällt. Auf diese Weise wird dem Bediener bzw. Fahrer exakt das Verhalten eines mechanisch rastierten Betätigungshebels präsentiert, obwohl eine mechanische Rastierung tatsächlich gar nicht vorhanden ist.

Ferner kann der Aktuator 6 auch dazu herangezogen werden, den Betätigungshebel 2 in die korrekte Schaltstellung nachzuführen, falls aus bestimmten Gründen eine Diskrepanz zwischen der Schaltstellung des Betätigungshebels 2 und dem tatsächlichen Schaltzustand im Getriebe auftreten sollte. Dies kann beispielsweise dann der Fall sein, falls im Getriebe per Auto-P automatisch die Parksperre eingelegt wurde, beispielsweise beim Abziehen des Zündschlüssels oder beim Verlassen des Kraftfahrzeugs, falls der Fahrer vergisst, die Parksperre manuell einzulegen. In diesem Fall lässt sich der Betätigungshebel 2 durch den Aktuator 6 automatisch in die Parksperrenstellung überführen, so dass für den Fahrer die Wählhebelstellung bei der Rückkehr zum Kraftfahrzeug mit der im Getriebe automatisch eingelegten Parksperre übereinstimmt auch dann, wenn der Wählhebel vom Fahrer zuvor in einer Fahrstufenstellung belassen worden war.

Auch zur Darstellung der Haptik eines monostabilen Betätigungshebels ist die in Fig.1 dargestellte Ausführungsform geeignet. In diesem Fall dient die Kombination aus verstellbaren Dämpfer 3 und Aktuator 6 einerseits wieder zur realistischen Simulation der Rastierung und gegebenenfalls von Schaltsperren bzw. Schaltwiderständen im Getriebe. Andererseits kann der Aktuator 6 auch dazu herangezogen werden, den Betätigungshebel 2 nach der Auslenkung aus der Neutralstellung und nach dem Loslassen wieder in die Neutralstellung zurückzuführen.

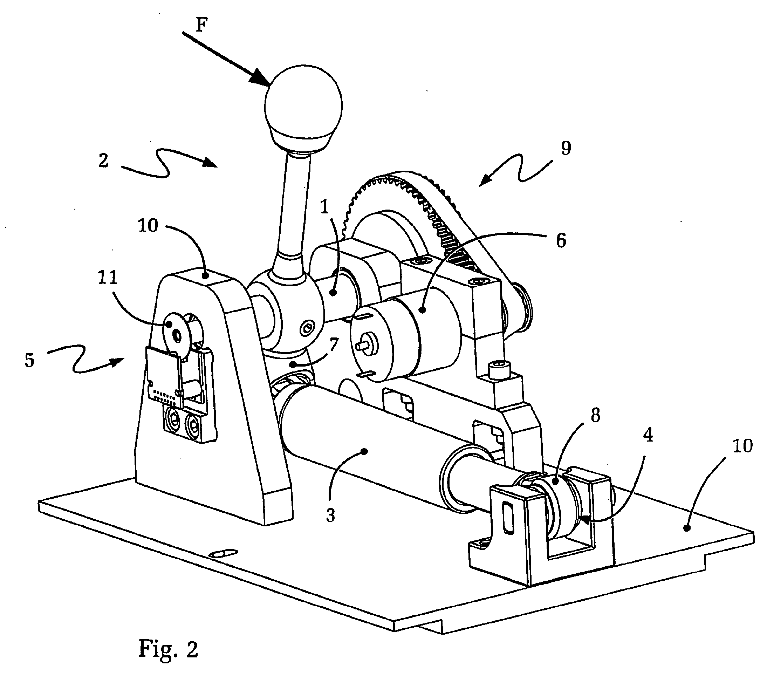

**Fig. 2** zeigt eine vom Wirkprinzip her mit der Darstellung gemäß **Fig.1** im Wesentlichen zunächst einmal übereinstimmende Ausführungsform einer Betätigungseinrichtung gemäß der vorliegenden Erfindung.

Auch hier erkennt man einen auf einer Welle 1 gelagerten Betätigungshebel 2, sowie ferner einen verstellbaren Dämpfer 3, einen Positionssensor 5 und einen aktuatorischen Antrieb 6. Anders als bei der schematischen Ausführungsform gemäß **Fig.1** umfasst der aktuatorische Antrieb 6 bei der Ausführungsform gemäß **Fig. 2** einen Riementrieb 9 als Übersetzung, was bezüglich des Wirkprinzips jedoch keinen wesentlichen Unterschied gegenüber der Betätigungseinrichtung gemäß **Fig. 1** ausmacht.

Die Ausführungsform gemäß **Fig. 2** unterscheidet sich jedoch von der Prinzipdarstellung gemäß **Fig. 1** zudem insbesondere in der Anordnung und Ausführung des Federelements 4. Bei der Ausführungsform gemäß **Fig. 2** ist nämlich das Federelement 4 in das Gelenk 8 integriert, mittels welchem der verstellbare Dämpfer 3 mit der Grundplatte 10 der Betätigungseinrichtung verbunden ist. Im einfachsten Fall ist das Federelement 4 somit lediglich in Form einer Restelastizität mit bekannter Federkonstante in das Gelenk 8 eingebaut, beispielsweise in Form einer Elastomerlage zwischen dem Außenring und dem Innenring des Gelenks 8. Ebensogut und mit demselben Effekt kann das Federelement 4 beispielsweise auch in das Gelenk 7 integriert werden.

Wird bei der Ausführungsform gemäß **Fig. 2** nun vom Fahrer eine Betätigungskraft F auf den Betätigungshebel 2 ausgeübt, so führt dies über das Gelenk 7 und den (zunächst starr geschalteten) verstellbaren Dämpfer 3 zu einer entsprechenden, geringfügigen Auslenkung des Außenrings des Gelenks 8 gegenüber dem Innenring des Gelenks 8 bzw. gegenüber der Befestigung des Gelenks 8 an der Grundplatte 10, infolge der entsprechenden Kompression des in das Gelenk 8 eingebauten Federelements 4. Diese Auslenkung im Gelenk 8 pflanzt sich wiederum rückwärts fort durch den Dämpfer 3 sowie über das Gelenk 7 auf den Betätigungshebel 2, der entsprechend ebenfalls eine geringfügige, für den Bediener kaum wahrnehmbare Auslenkung erfährt. Diese Auslenkung des Betätigungshebels 2 führt zu einer entsprechenden, geringfügigen Rotation der Welle 1 und dementsprechend auch zu einer Rotation der Sensorscheibe 11 des Positionssensors 5. Diese Rotation der Sensorscheibe 11 wiederum wird durch die Auswertungsschaltung des Positionssensors 5 registriert, wonach anhand der Größe der Auslenkung des Betätigungshebels 2 sowie anhand der bekannten Federkonstante des Federelements 4 die Größe der auf den Betätigungshebel ausgeübten Kraft ermittelt werden kann.

Die auf den Betätigungshebel 2 ausgeübte Kraft F bei nicht starr geschaltetem Dämpfer 3 - mit anderen Worten bei gleichzeitig erfolgender Schwenkbewegung des Betätigungshebels 2 - kann selbstverständlich auch ermittelt werden. Hierzu muss jedoch die Kompression des Federelements 4 gar nicht mehr gemessen werden, da die Größe der auf den Betätigungshebel 2 ausgeübten Kraft F im Fall des gleichzeitig bewegten Betätigungshebels 2 bereits anhand der Bewegungsgeschwindigkeit des Betätigungshebels sowie anhand der bekannten Kennlinie und des bekannten Arbeitspunkts des verstellbaren Dämpfers 3 ermittelt werden kann.

Ebenso wie bei der Ausführungsform gemäß Fig. 1 dient der Aktuator 6 bei der Ausführungsform gemäß Fig. 2 insbesondere wieder der äußerst realistischen Nachbildung der Haptik eines rastierten Betätigungshebels 2, indem mittels des Aktuators 6 das Rückfedern des Betätigungshebels 2 in die jeweiligen Rastierpositionen einer (nicht vorhandenen) Rastierkuhsse simuliert wird.

Im Ergebnis wird somit deutlich, dass mit der Erfindung eine Betätigungseinrichtung mit Haptikemulation für ein shift-by-wire-betätigtes Gangwechselgetriebe geschaffen wird, die zunächst einmal insbesondere den Vorteil aufweist, mit nur einem Sensor sowohl die Position (und gegebenenfalls die Bewegungsgeschwindigkeit), als auch die auf den Betätigungshebel ausgeübte Betätigungskraft feststellen zu können.

Auf diese Weise kann die Anzahl der erforderlichen Sensoren zur zuverlässigen Ermittlung des Zustands eines Betätigungshebels gegenüber dem Stand der Technik halbiert werden, was zu entsprechenden konstruktiven Vereinfachungen und Kostenreduzierungen führt. Ferner ermöglicht die Erfindung, dass dem Fahrer exakt das Verhalten eines mechanisch rastierten Betätigungshebels präsentiert wird, obwohl eine mechanische Rastierung überhaupt nicht mehr vorhanden ist. Zudem kann diese virtuelle Rastierung sowohl bezüglich der Anzahl und des Abstands der Rastierpunkte, als auch bezüglich der Härte der Rastierung frei steuerbar variiert werden. Hierdurch wird es möglich, die gesamte Haptik und die gesamten Bewegungseigenschaften einer Betätigungseinrichtung für ein Gangwechselgetriebe rein softwareseitig in weitem Umfang zu verändern und an die Nutzerpräferenzen anzupassen. Sogar eine rein softwaregesteuerte Umschaltung der Haptik einer Betätigungseinrichtung zwischen einem Automatikwählhebel und einem Schalthebel für ein klassisches Schaltgetriebe lässt sich realisieren.

Die Erfindung leistet somit einen elementaren Beitrag zur Verbesserung der Ergonomie, des Bedienkomforts, der Bauraum- und der Kosteneffektivität insbesondere bei anspruchsvollen Anwendungen im Bereich der Getriebebetätigung von Kraftfahrzeugen, und ermöglicht einen wesentlichen Schritt auf dem Weg des Ersatzes von aufwändigen mechanischen Komponenten durch Software.

### Bezugszeichenliste

- 1: Welle
- 2: Betätigungshebel
- 3: verstellbarer Dämpfer
- 4: Federelement
- 5: Positionssensor, Drehwinkelsensor
- 6: motorischer Aktuator
- 7, 8: Gelenk
- 9: Riementrieb
- 10: Sockel, Grundplatte
- 11: Sensorscheibe
- F: Betätigungskraft
- W: Wirkverbindung für die Betätigungskraft

## Patentansprüche

1. Betätigungseinrichtung insbesondere zur Auswahl von Schaltstufen eines shift-by-wire-Gangwechselgetriebes, die Betätigungseinrichtung umfassend einen Betätigungshebel (2) mit einem Positionssensor (5) zur Ermittlung der Position des Betätigungshebels (2) sowie eine Einrichtung zur Haptikemulation, wobei die Haptikemulationseinrichtung einen mit dem Betätigungshebel (2) verbundenen, an einem Sockel (10) der Betätigungseinrichtung angelenkten (8) verstellbaren elektrorheologischen oder magnetorheologischen Dämpfer (3) sowie einen motorischen Aktuator (6) umfasst,
**gekennzeichnet durch**
ein innerhalb einer Wirkverbindung (W) zwischen Betätigungshebel (2), verstellbarem Dämpfer (3) und Anlenkung (8) des Dämpfers (3) angeordnetes Federelement (4) mit bekannter Federkonstante zur Ermittlung der auf den Betätigungshebel ausgeübten Bedienkraft (F) mittels des Positionssensors (5), wobei der verstellbare Dämpfer (3) anhand eines Steuerungskennfelds ausschließlich zur Erzeugung von Gegenkräften eingerichtet ist, während der motorische Aktuator (6) anhand des Kennfelds ausschließlich zur aktuatorischen Bewegung des Betätigungshebels (2) eingerichtet ist..

2. Betätigungseinrichtung nach Anspruch 1,
**dadurch gekennzeichnet,**
**dass** das Federelement (4) durch ein Elastomerelement gebildet ist.

3. Betätigungseinrichtung nach Anspruch 1 oder 2.
**dadurch gekennzeichnet,**
**dass** das Federelement (4) durch einen O-Ring gebildet ist.

4. Betätigungseinrichtung nach einem der Ansprüche 1 bis 3,
**dadurch gekennzeichnet,**
**dass** das Federelement (4) im Bereich eines Gelenks (8) der Betätigungseinrichtung angeordnet ist.

5. Betätigungseinrichtung nach Anspruch 4,
**dadurch gekennzeichnet,**
**dass** der Aktuator (6) ein elektrischer Servo-Getriebemotor ist.

6. Betätigungseinrichtung nach Anspruch 5,
**dadurch gekennzeichnet,**
**dass** der Betätigungshebel (2) unmittelbar mit der Welle des Aktuators (6) verbunden ist.

## Claims

1. Actuation device, in particular for selecting shifting stages of a shift-by-wire change speed gearbox, the actuation device comprising an actuation lever (2) with a position sensor (5) for determining the position of the actuation lever (2) and a device for haptic emulation, wherein the haptic emulation device comprises an adjustable electro-rheological or magneto-rheological damper (3) which is connected to the actuation lever (2) and is coupled (8) to a base (10) of the actuation device, and comprises a motor actuator (6),
**characterized by**
a spring element (4) which is arranged within an operative connection (W) between the actuation lever (2), the adjustable damper (3) and the coupling (8) of the damper (3) and has a known spring constant for determining the operator control force (F) applied to the actuation lever, by means of the position sensor (5), wherein the adjustable damper (3) is configured exclusively to generate opposing forces on the basis of a control characteristic diagram, while the motor actuator (6) is configured exclusively to move the actuation lever (2) in the manner of an actuator on the basis of the characteristic diagram.

2. Actuation device according to Claim 1,
**characterized**
**in that** the spring element (4) is formed by an elastomer element.

3. Actuation device according to Claim 1 or 2,
**characterized**
**in that** the spring element (4) is formed by an 0 ring.

4. Actuation device according to one of Claims 1 to 3,
**characterized**
**in that** the spring element (4) is arranged in the region of a joint (8) of the actuation device.

5. Actuation device according to Claim 4,
**characterized**
**in that** the actuator (6) is an electrical servo gearbox motor.

6. Actuation device according to Claim 5,
**characterized**
**in that** the actuation lever (2) is connected directly to the shaft of the actuator (6).

## Revendications

1. Dispositif d'actionnement, en particulier pour la sélection de rapports de changement de vitesse d'une boîte de vitesses à commande électrique, le dispositif d'actionnement comprenant un levier d'actionnement (2) avec un capteur de position (5) pour déterminer la position du levier d'actionnement (2) ainsi qu'un dispositif d'émulation haptique, le dispositif d'émulation haptique comprenant un amortisseur réglable (3), électro-rhéologique ou magnéto-rhéologique, connecté au levier d'actionnement (2), articulé (8) à un socle (10) du dispositif d'actionnement, ainsi qu'un actionneur (6) à moteur,
**caractérisé par**
un élément de ressort (4) disposé à l'intérieur d'une liaison fonctionnelle (W) entre le levier d'actionnement (2), l'amortisseur réglable (3) et l'articulation (8) de l'amortisseur (3), ayant une constante de rappel connue pour déterminer la force de commande (F) exercée sur le levier d'actionnement au moyen du capteur de position (5), l'amortisseur réglable (3) étant prévu exclusivement pour générer des forces opposées à l'aide d'un champ caractéristique de commande, tandis que l'actionneur (6) à moteur est prévu exclusivement pour le déplacement par actionnement du levier d'actionnement (2) à l'aide du champ caractéristique.

2. Dispositif d'actionnement selon la revendication 1,
**caractérisé en ce que**
l'élément de ressort (4) est formé par un élément élastomère.

3. Dispositif d'actionnement selon la revendication 1 ou 2,
**caractérisé en ce que**
l'élément de ressort (4) est formé par un joint torique.

4. Dispositif d'actionnement selon l'une quelconque des revendications 1 à 3,
**caractérisé en ce que**
l'élément de ressort (4) est disposé dans la région d'une articulation (8) du dispositif d'actionnement.

5. Dispositif d'actionnement selon la revendication 4,
**caractérisé en ce que**
l'actionneur (6) est un servomoteur-réducteur électrique.

6. Dispositif d'actionnement selon la revendication 5,
**caractérisé en ce que**
le levier d'actionnement (2) est connecté directement à l'arbre de l'actionneur (6).
